# EUROPÄISCHE PATENTSCHRIFT

(11) **EP 2 694 829 B1**
(45) Veröffentlichungstag und Bekanntmachung des Hinweises auf die Patenterteilung: **26.08.2015**
(21) Anmeldenummer: 12713931.9
(22) Anmeldetag: 28.03.2012
(51) Int. Cl.: F16C 33/04, F16C 33/20

(54) **GLEITSYSTEM**
SYSTEM OF SLIDING ELEMENTS
SYSTÈME COULISSANT

(30) Priorität: 01.04.2011 DE 102011016611
(43) Veröffentlichungstag der Anmeldung: 12.02.2014
(73) Patentinhaber: Fraunhofer Gesellschaft zur Förderung der angewandten Forschung E.V., 80686 München (DE); Technische Universität Dresden, 01069 Dresden (DE)
(72) Erfinder: SCHEIBE, Hans-Joachim, 01309 Dresden (DE); LEONHARDT, Michael, 08223 Grünbach (DE); LESON, Andreas, 01328 Dresden (DE); HUFENBACH, Werner, 01324 Dresden (DE); ANDRICH, Manuela, 01279 Dresden (DE); KUNZE, Klaus, 01157 Dresden (DE)
(74) Vertreter: Pfenning, Meinig & Partner GbR
(86) Internationale Anmeldenummer: PCT/EP2012/055473
(87) Internationale Veröffentlichungsnummer: WO 2012/130865

(56) Entgegenhaltungen:
- DE-A1- 10 142 303
- DE-A1- 19 632 186
- DE-C1- 19 502 568
- DE-U1- 8 601 948
- DE-U1-202005 003 009
- US-A1- 2009 060 408

## Beschreibung

Die Erfindung betrifft Gleitsysteme, die mit einem Grund- und einem Gegenkörper gebildet sind. Es kann sich dabei z.B. um Gleitlager, Gleitführungen, Zahnräder oder andere tribologisch beanspruchte Maschinenelemente handeln. Ein Einsatz kann dabei im Trockenlauf unter Verzicht auf Schmiermittel oder mit einer einmaligen Initialschmierung erfolgen.

Üblicherweise kommt es bei herkömmlichen Gleitsystemen bei Trockenlauf oder geringer Schmierung zu einem stark erhöhten Verschleiß, was zur Reduzierung der Lebensdauer führt.

Solche Gleitsysteme sollen eine kleine Reibungszahl f und einen kleinen Verschleißkoeffizienten k aufweisen und dies sollte ohne oder mit einer geringen Menge an Schmiermitteln erreicht werden können. Außerdem ist der Leichtbauaspekt bei vielen Anwendungen zu berücksichtigen, wie dies zum Beispiel in der Raumfahrt der Fall ist. In der Luft-, Raumfahrt oder in Reinräumen ist auch eine Freisetzung von Partikeln nachteilig und daher unerwünscht.

Aus der EP 1 892 418 A2 ist eine Zahnradmaschine bekannt, bei der eine Lagerbuchse aus ausgewählten Polymeren und dabei u.a. aus PTFE oder einem Glasfaserverbund der darin genannten Polymere und eine Welle eine Gleitlagerung bilden. Die reinen Polymere und auch die Polymere im Glasfaserverbund weisen jedoch eine geringe Festigkeit auf und neigen zu einem Verzug bei wirkenden Kräften und Momenten. Dies verstärkt sich bei erhöhten Temperaturen, die beim Betrieb aber auftreten können. Diese Nachteile werden bei Einsatz von einfachem Faserverbund, bei denen die relativ kurzen Fasern regellos in einer Polymermatrix verteilt sind, nur unwesentlich in ihrer Wirkung reduziert.

Da die in der Matrix enthaltenen Fasern auch bis zur Oberfläche reichen, kommt es dazu, dass Faserteile abrasiv bei der Gleitpaarung wirken, und so der Verschleiß erhöht wird.

Die tribologischen Eigenschaften können mit Festschmierstoffen, die in Partikelform dispers in der Polymermatrix verteilt vorhanden sein können, verbessert werden. Hierfür ist aber ein Anteil an Festschmierstoff von mindestens 10 Vol.-% in der Matrix erforderlich. Ein solcher Anteil an Festschmierstoff beeinflusst aber die mechanischen Eigenschaften in erheblichem Maß. Außerdem werden die Viskosität und die Fließfähigkeit der Matrix verändert. Dies führt dazu, dass bei den eingesetzten Injektionsverfahren mit denen das Polymer mit den Fasern verarbeitet wird, inhomogene Verteilungen von Festschmierstoffen in der Polymermatrix auftreten. Mit dem Einsatz von Festschmierstoffen erhöhen sich außerdem die Kosten.

Die bei der aus EP 1 892 418 A2 bekannte Gleitlagerung verwendete Welle, die in der Lagerbuchse gelagert ist, kann dabei mit einer Beschichtung aus diamantähnlichem Kohlenstoff versehen sein, um die Reibverhältnisse zu verbessern.

Aus DE 196 32 186 A1 ist ein Schaftelement aus Metallmaterial bekannt, dessen Gleitfläche aus einem Keramikmaterial gebildet wird, während das Lagerelement ebenfalls im wesentlichen aus einem Metallmaterial hergestellt ist und eine Gleitfläche aufweist, die durch die Oberfläche einer Buchse aus einem Kunstharz gebildet ist.

DE 86 01948 U1 beschreibt einen Verbundwerkstoff, insbesondere für die Herstellung von Reib- und Gleitelementen, dessen Deckschicht aus thermisch hoch belastbarem Kunststoff und Füllstoffen aus der Gruppe der Kohlenstofffasern, PTFE-Teilchen, Graphit, Molybdänsulfid, Bornitrid und dergleichen besteht, wobei die Füllstoffe einen Anteil von 8-20 Vol.-% bilden.

In DE 10142 303 A1 wird ein Radiallager beschrieben, bei dem das Gleitmaterial aus technischen Kunststoffen mit niedriger Reibung, insbesondere hochpolymeren Verbundharzmaterialien, gebildet wird. Zu Verbesserung des Verschleißwiderstandes werden den Kunststoffen u.a. Glasfasern, Kohlenstofffasern, Graphit oder Molybdändisulfid zugesetzt.

DE 195 02 568 C1 beschreibt eine harte, amorphe, wasserstofffreie Kohlenstoffschicht mit einer Härte von >40GPa, einem E-Modul >400GPa, einer Rauheit von ca. 100nm und einem Wasserstoffanteil von <0,5AT%, sowie ihre Herstellung. Die beschriebene Schicht weist ein gutes Reib-Gleit-Verhalten auf.

Aufgabe der Erfindung ist es, ein Gleitsystem, bestehend aus einem Grund- und einem Gegenkörper, zur Verfügung zu stellen, das eine reduzierte Eigenmasse bei ausreichender Festigkeit aufweist und verbesserte Reib- und Verschleißeigenschaften erreicht.

Erfindungsgemäß wird diese Aufgabe mit einem Gleitsystem, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Ein erfindungsgemäßes Gleitsystem ist mit einem Gegenkörper und einem Grundkörper als Reibpartner gebildet. Der Grundkörper ist dabei immer aus einem kohlenstofffaserfaserverstärkten Polymermaterial in Form einer textilverstärkten polymeren Matrixstruktur gebildet und der Gegenkörper ist an der auf Reibung beanspruchten Oberfläche mit diamantähnlichem Kohlenstoff (DLC) beschichtet.

Der Grundkörper sollte mit einem Gewebe, Gewirk, Geflecht oder Gelege aus Kohlenstofffasern gebildet sein. Der Anteil an Fasern soll mindestens 50 % in Bezug zur polymeren Matrix betragen. Dieser Anteil sollte auch bei einem Gegenkörper, der ebenfalls aus einer textilverstärkten polymeren Matrixstruktur gebildet ist, eingehalten werden. Bei Einsatz eines Grund- und Gegenkörpers mit einer textilverstärkten polymeren Matrixstruktur sollte die auf Reibung beanspruchte Oberfläche des Gegenkörpers unmittelbar mit einer Beschichtung aus diamantähnlichem Kohlenstoff versehen sein.

Die diamantähnliche Beschichtung sollte - eine Härte von mindestens 4000 HV, - einen E-Modul von mindestens 400 GPa, - eine mittlere Rauheit R_{z} kleiner 1 µm, bevorzugt kleiner 0,4 µm und/oder - einen Anteil an Wasserstoff kleiner 0,5 At % aufweisen. Eine solche Schicht ist, wie auch deren Herstellung, aus EP 0 724 023 B1 bekannt und es wird auf deren Inhalt vollinhaltlich Bezug genommen.

Die geringe mittlere Rauheit kann bei der Ausbildung der Beschichtung durch Einsatz bekannter Filter bei den einschlägigen PVD-Verfahren, bei denen in der Regel Bogenentladungen genutzt werden, erreicht werden. Solche Filter sind beispielsweise in US 2007/0209934 A1 oder DE 198 50 218 C1 beschrieben. Mit den Filtern kann das Problem der so genannten Dropletbildung bei der Beschichtung vermieden, zumindest jedoch erheblich reduziert werden. Es besteht aber auch die Möglichkeit eine mechanische Oberflächenbearbeitung zur Reduzierung der Oberflächenrauheit durchzuführen, wie dies in EP 1 829 986 B1 beschrieben ist.

Die gewünschte hohe Härte kann insbesondere durch den äußerst kleinen Anteil an enthaltenem Wasserstoff erreicht werden. Die Beschichtung sollte mit tetraedisch gebundenem amorphem Kohlenstoff (ta-C) gebildet sein.

Der Gegenkörper kann aus einem Metall oder einer Metalllegierung gebildet sein. Das Metall oder die Metalllegierung kann die erforderliche Festigkeit und ggf. auch die gewünschte Wärmeleitfähigkeit berücksichtigen. So ist eine gute Wärmeabfuhr günstig, da ja der Grundkörper schlechter Wärme leitend ist.

Zwischen der Oberfläche eines metallischen Gegenkörpers und der Beschichtung aus diamantähnlichem Kohlenstoff kann mindestens eine Zwischenschicht ausgebildet sein, die eine verbesserte Haftung der Beschichtung und eine Barrierewirkung erreichen kann. Die Auswahl des Werkstoffs für eine Haftung verbessernde Zwischenschichten kann unter Berücksichtigung der thermischen Ausdehnungskoeffizienten des Kohlenstoffs und des Gegenkörperwerkstoffs erfolgen. Geeignete Werkstoffe für Zwischenschichten sind beispielsweise Ti, Zr, V, Nb, Ta, Cr, Mo oder W.

Die Beschichtung aus diamantähnlichem Kohlenstoff sollte eine Schichtdicke im Bereich 1 µm bis 10 µm, bevorzugt von 2 µm bis 3 µm haben.

Bei der Erfindung kann die Faserorientierung, der textilverstärkten polymeren Matrixstruktur beliebig eingestellt werden. Dabei ist eine parallele Ausrichtung in Bezug zu den wirkenden Reibkräften, also in Gleitrichtung bevorzugt. Dadurch kann das Gleitsystem unmittelbar in die Verbundstruktur integriert sein, deren sonstiger Aufbau kann aus anderen Beanspruchungsbedingungen abgeleitet ausgebildet sein.

Es können sowohl duromere Polymere, wie Epoxidharze, ungesättigte Polyesterharze oder Phenolharze, aber auch thermoplastische Polymere, wie Polyamide, Polyacetate oder Polyetherketone eingesetzt werden.

Ein Grundkörper und/oder ein Gegenkörper kann/können aus mehreren miteinander verbundenen Vorprodukten hergestellt werden. Dabei können die Vorprodukte stoffschlüssig durch Kleben oder Verschweißen miteinander verbunden werden und jedes Vorprodukt kann unterschiedliche Eigenschaften aufweisen, die deren Anordnung am jeweiligen Körper berücksichtigen. Die Vorprodukte können in unterschiedlicher Form hergestellt sein und dabei eine unterschiedliche Textilverstärkung aufweisen.

Bei den erfindungsgemäßen Gleitsystemen sind keine inkorporierten verschleißmindernden Materialien oder Beschichtungen, wie Gelcoat- oder Gleitlackschichten erforderlich.

Die besonders harte Beschichtung auf einem Gegenkörper ist in der Lage Abriebpartikel, die ggf. aus dem Material des Grundkörpers abgetragen werden, für einen selbstschmierenden Effekt zu nutzten. Dies ist besonders bei Einsatz von Kohlenstofffasern der Fall. Solche Partikel wirken dann nicht abrasiv auf beide Reibpartner.

Mit der Reibpaarung, die der Grundkörper und der Gegenkörper mit der Beschichtung aus diamantähnlichem Kohlenstoff bilden, kann nicht nur die Reibung, sondern auch der Verschleiß erheblich reduziert werden, was auch bei Trockenlauf ohne jegliches Schmiermittel erreicht werden kann.

Die tribologischen Verhältnisse und auch der Verschleiß können mit Einsatz von Schmiermittel weiter verbessert werden. Es hat sich herausgestellt, dass Wasser oder Glyzerin die tribologischen Verhältnisse weiter verbessern und der Reibungskoeffizient µ dadurch weiter reduziert werden kann. Es können aber auch andere Festschmierstoffe, wie z.B. MoS₂ oder Graphit bzw. auch Schmierstoffe mit reibungs- und verschleißmindernden Additiven eingesetzt werden. Bei Einsatz von Schmierstoff ist eine einmalige Initialschmierung für viele Anwendungen zu bevorzugen.

Das erfindungsgemäße Gleitsystem kann auch so ausgebildet sein, dass sowohl der Grundkörper, wie auch der Gegenkörper an tribologisch beanspruchten Oberflächen mit diamantähnlichem Kohlenstoff beschichtet sind, wie dies hier bereits für den so beschichteten Gegenkörper beschrieben worden ist. Nachfolgend soll die Erfindung an Hand von Beispielen näher erläutert werden.

Dabei zeigen:
Figur 1 ein Beispiel für die Herstellung eines Gelenks, als Gleitsystem;
Figur 2 ein Gleitlager als ein weiteres Beispiel für ein erfindungsgemäßes Gleitsystem;
Figur 3 eine Welle-Nabe-Verbindung als ein weiteres erfindungsgemäßes Beispiel und
Figur 4 eine Zahnradpaarung als ein weiteres erfindungsgemäßes Beispiel.

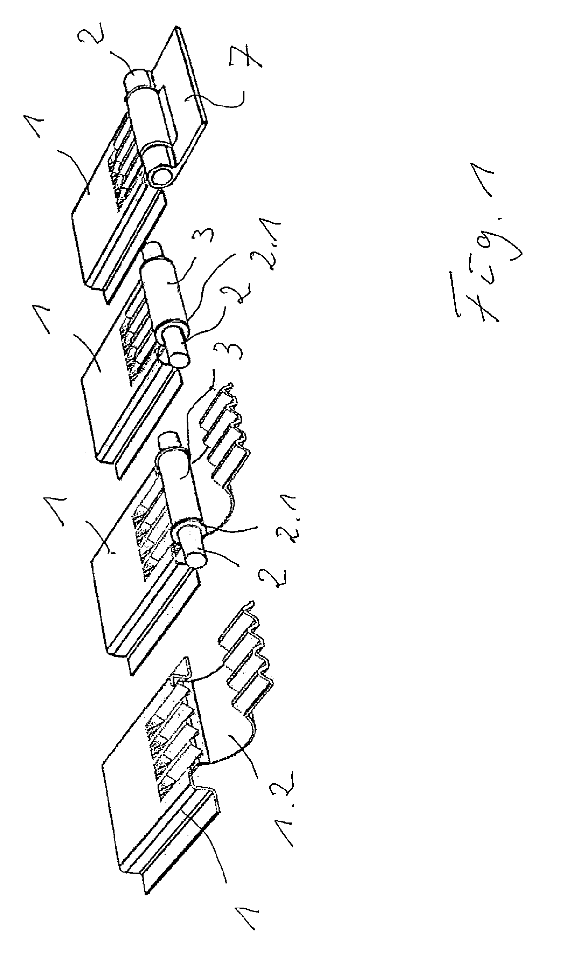

Bei einem ersten Beispiel soll die Herstellung eines Gelenks mit einer thermoplastischen Verbundstruktur in mehreren Schritten beschrieben werden, wie es mit Figur 1 verdeutlicht ist. Der Grundkörper 1 ist der bei diesem Beispiel aus einer textilverstärkten polymeren Matrixstruktur gebildet, die wiederum mit Kohlenstofffasern und Polyetherkethon (CF-PEEK) hergestellt worden ist. Mit diesem thermoplastischen Polymer sind eine Warmumformbarkeit und eine Schweißbarkeit möglich.

Der Grundkörper 1 ist zumindest im Bereich, in dem es zu einem Kontakt mit dem Gegenkörper 2 kommt, aus textilverstärktem Polymer gebildet. Dabei wurde ein unidirektionales Kohlenstofffasergelege (T700-Fasern) eingesetzt. Dieses Gelege wurde in eine PEEK-Matrix eingebettet.

Der Gegenkörper 2, in diesem Fall eine Achse, besteht aus Baustahl E295 und ist mit einer 4 µm dicken Beschichtung aus diamantähnlichem Kohlenstoff zwischen den zwei im äußeren Randbereich ausgebildeten Bünden 2.1 beschichtet.

Die Beschichtung 3 hatte eine Härte von 4500 HV, einen E-Modul von 430 GPa. Die mittlere Rauheit R_{z} lag bei 0,3 µm und der Anteil an Wasserstoff war kleiner als 0,4 At-%. Die Schichtdicke betrug 3 µm.

Die Herstellung des Scharniergelenks erfolgt durch thermoplastisches Umformen. Hierfür wird der zu verformende Bereich 2.2, der nach der Fertigstellung die Achse 2 umschließt, auf 270 °C erwärmt, was mit einem Infrarotstrahler erreicht werden kann. Nach dem Einlegen der Achse als Gegenkörper 2 wird dieser Bereich verformt, so dass die Achse vom Grundkörper 1 umschlossen ist. Dies kann in einer Vorrichtung durch formschlüssiges Fügen mit Schlaufenformung erreicht werden.

Im Anschluss erfolgt ein stoffschlüssiges Schweißen des Grundkörpermaterials, so dass die Achse 2 sicher und fest umschlossen ist. Im Anschluss daran kann ein Scharnier 7 montiert werden.

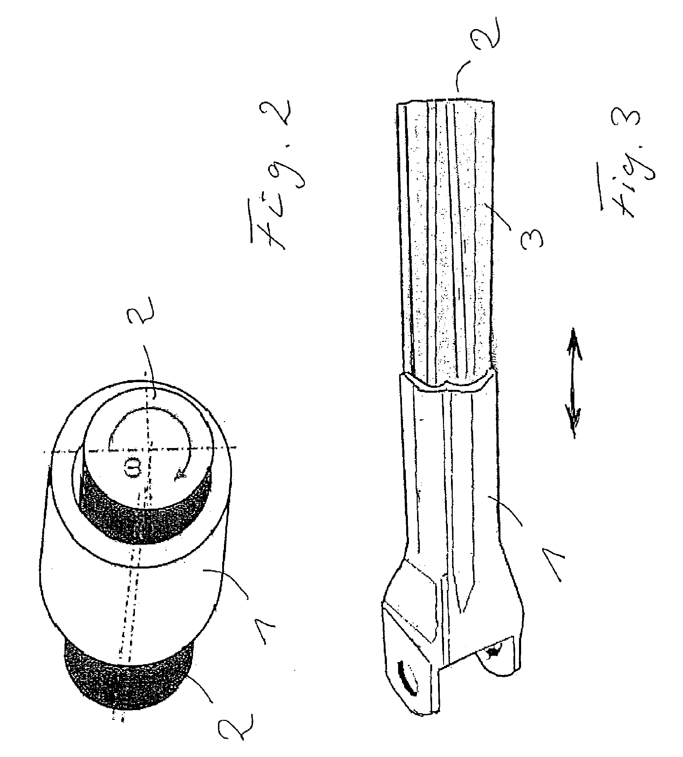

In Figur 2 ist ein zweites Beispiel in Form eines Gleitlagers gezeigt. Hier ist eine Welle als Gegenkörper 2 aus geschliffenem Stahl (100Cr6) an der gesamten Oberfläche mit einer Beschichtung 3 aus diamantähnlichem Kohlenstoff beschichtet. Die Beschichtung 3 hatte eine Härte von 5000 HV, einen E-Modul von 500 GPa. Die mittlere Rauheit R_{z} lag bei 0,2 µm und der Anteil an Wasserstoff war kleiner als 0,3 At-%. Die Schichtdicke betrug 2 µm. Die Lagerhülse als Grundkörper 1 besteht aus textilverstärktem Epoxidharz.

Die Lagerhülse kann spanend bearbeitet und aus einem rohrförmigen Halbzeug hergestellt werden. Dabei kann das Halbzeug mit einem Wickeldorn gemeinsam in eine Rundschleifmaschine eingespannt und dann bis auf den gewünschten Außendurchmesser bearbeitet werden. Nach Entfernung des Wickeldorns kann auf die gewünschte Länge der Lagerhülse 1 abgetrennt werden.

Das für die Lagerhülse als Grundkörper 1 eingesetzte Halbzeug ist gradiert aufgebaut und kann im Nasswickelverfahren in einer CNC-gesteuerten Wickelmaschine hergestellt werden. Dabei wird ein Kohlenstofffaser-Roving (Typ T 700), der auf einer Spule abgelegt ist, durch ein Epoxidharzbad gezogen und auf dem Wickeldorn appliziert. Die Imprägnierung des Rovingstrangs erfolgt mit kalthärtendem Epoxidharz vom Typ L 1000. Die ersten drei Wicklungen erfolgen in Umfangsrichtung. Die Kohlenstofffasern an den tribologischen Kontaktflächen liegen so in der bevorzugten 0°-Richtung, also in Richtung der wirkenden Reibkräfte. Der restliche Teil der Lagerhülse 1 wird mit zehn ± 45°-Wicklungen gebildet. Bis zum Aushärten des Epoxidharzes wird der Grundkörper 1 mit dem Wickeldorn über einen Zeitraum von 6 h, bei einer Temperatur von 60 °C getempert und kann anschließend spanend endbearbeitet werden.

Die so erhaltene Gleitlagerung wurde auf einem Lagerprüfstand bei einer Gleitgeschwindigkeit von 0,3 m/s, einer Normalkraft von 100 N im Trockenlauf geprüft. Das Einbaulagerspiel zwischen der Lagerhülse 1 und der Welle 2 lag bei 0,4 % des Wellendurchmessers.

Dabei konnte eine Gleitreibungszahl f = 0,33 und eine Verschleißkoeffizient k = 1,2 * 10⁻⁷ mm³/Nm ermittelt werden. Auf der mit der Beschichtung 3 versehenen Welle 2 konnte kein Verschleiß festgestellt werden.

Ein drittes Beispiel, wie es in Figur 3 gezeigt ist, ist eine Welle-Nabe-Verbindung, die eine ausgleichende Funktion aufweist und somit tribologisch beansprucht ist. Der Grundkörper 1 ist dabei eine Kardangelenkkupplung und der Gegenkörper 2 eine Profilwelle jeweils aus textilverstärktem Epoxidharz. Der Gegenkörper ist mit einer Beschichtung 3 aus diamantähnlichem Kohlenstoff gebildet. Die Beschichtung 3 hatte eine Härte von 4100 HV, einen E-Modul von 410 GPa. Die mittlere Rauheit R_{z} lag bei 0,3 µm und der Anteil an Wasserstoff war kleiner als 0,4 At-%. Die Schichtdicke betrug 4 µm. Grundkörper 1 und Gegenkörper 2 werden mittels eines Injektionsverfahrens, das als RTM-Technik bezeichnet wird, hergestellt. Es werden Geflechte aus Kohlenstofffasern (T 700-Rovings) als Preform in ein Formwerkzeug aus Aluminium eingesetzt und das Epoxidharz vom Typ RTM6 injiziert. Die Innenkontur des Grundkörpers 1 wird mit Hilfe der Schlauchblastechnik hergestellt.

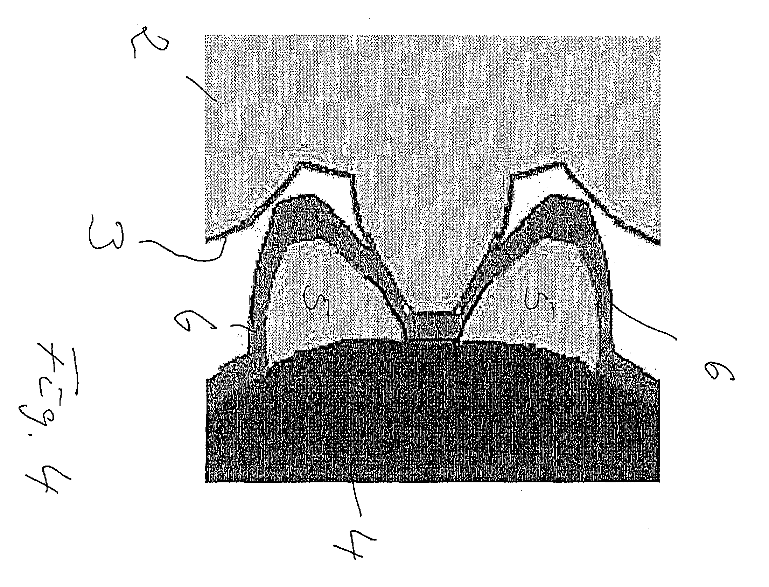

In Figur 4 ist ein viertes Beispiel gezeigt. Dies ist eine geradverzahnte Zahnradpaarung mit einer standartisierten Evolventenverzahnung. Das kleinere Zahnrad (Ritzel) bildet den Gegenkörper 2 und besteht aus Aluminium. Das größere Zahnrad ist der Grundkörper 1, der aus textilverstärktem Epoxidharz gebildet ist. Die äußere auf Reibung beanspruchte Schicht kann dabei mit einem PTFE-Pulver modifiziert sein, um eine zusätzliche Reibungsminderung zu erreichen.

Das Zahnrad 2 ist aus AlCuMg1, 3.1325 hergestellt. Die Zähnezahl z₁ ist 23, der Modul m = 14 mm, die Zahnbreite b = 178 mm. Die Herstellung kann durch Abwälzfräsen erreicht werden. Seine tribologisch beanspruchten Oberflächen sind mit einer Beschichtung 3 versehen worden. Die Beschichtung aus diamantähnlichem Kohlenstoff hatte eine Härte von 6000 HV, einen E-Modul von 550 GPa. Die mittlere Rauheit R_{z} lag bei 0,2 µm und der Anteil an Wasserstoff war kleiner als 0,3 At-%. Die Schichtdicke betrug 3 µm.

Das größere Zahnrad als Grundkörper 1 hatte eine Zähnezahl z₂ = 81, einen Modul m = 14 mm und eine Zahnbreite b = 175 mm. Er wird unter Einsatz mehrerer Vorprodukte 4, 5 und 6 hergestellt. Der eigentliche Zahnradkörper wird mit einem Vorprodukt 4, das ein Preform aus mehreren Lagen Kohlenstofffasergeflecht (Typ T 700) mit Epoxidharz vom Typ RTM6 ist, gebildet. Auf diesem Zahnradkörper werden mit Hilfe einer Vorrichtung entsprechend der Zähnezahl 81 pultrudierte kohlenstofffaserverstärkte Epoxidharzprofile, als Vorprodukte 5 mit einem Kleber stoffschlüssig befestigt. Das Pultrusionsprofil entspricht annähernd der Zahnkontur der Zähne. Über dieses mit den beiden Vorprodukten 4 und 5 gebildetes Zwischenprodukt werden Flechtschläuche aus Kohlenstofffasern (Typ 700), als Vorprodukt 6 drapiert. Die äußeren Flechtschläuche können zur weiteren Reibungsminderung mit PTFE-Pulver modifiziert sein.

Die so erhaltene Preform kann dann mittels eines Injektionsverfahrens, das als RTM-Technik bezeichnet wird, weiter bearbeitet werden. Dabei wird durch erhöhten Druck Epoxidharz in ein Formwerkzeug eingespritzt und mit angelegtem Unterdruck Epoxidharz injiziert und infiltriert. Die Kontur des Grundkörpers 1 kann mit Hilfe der Schlauchblastechnik hergestellt werden.

Das den Grundkörper 1 bildende Zahnrad kann durch Trennschleifen auf die gewünschte Breite abgelängt werden.

Die erhaltene Zahnradpaarung zeichnet sich durch hohe Funktionalität, eine absolute Wartungsfreiheit und ein hohes Dämpfungsvermögen aus. Vor allen Dingen ist die Eigenmasse gegenüber herkömmlichen Zahnradpaarungen mit äquivalenter Festigkeit erheblich reduziert, so dass der Leichtbaueffekt weitestgehend berücksichtigt ist. Die Masse kann gegenüber Zahnrädern aus Stahl für das Ritzel (Gegenkörper 2) auf 34 % und das größere Zahnrad (Grundkörper 1) auf 20 % reduziert werden.

Mit einer Beschichtung 3 aus diamantähnlichem Kohlenstoff ist der Einsatz von Aluminium auch bei dieser Anwendung möglich, was bei Anwendungen für Zahnräder und Gleitlager bisher nicht üblich war. Es wirkt sich dabei zusätzlich die gute thermische Leitfähigkeit von Aluminium vorteilhaft aus. Die thermische Leitfähigkeit von Aluminium liegt bei 226 W/mK und die thermische Leitfähigkeit des diamantähnlichen Kohlenstoffs liegt bei 2 W/mK.

## Patentansprüche

1. Gleitsystem, das mit einem Gegenkörper und einem Grundkörper als Reibpartner gebildet ist und der Grundkörper aus einem faserverstärkten Polymermaterial gebildet ist und der Gegenkörper an der auf Reibung beanspruchten Oberfläche mit diamantähnlichem Kohlenstoff beschichtet ist,
**dadurch gekennzeichnet, dass**
mindestens der Grundkörper (1) aus einer textilverstärkten polymeren Matrixstruktur gebildet ist und wobei die Textilverstärkung aus Kohlenstofffasern mit einem Anteil von mindestens 50 Vol.-% in Bezug zur polymeren Matrix besteht.

2. Gleitsystem nach Anspruch 1, **dadurch gekennzeichnet, dass** die Textilverstärkung des Grundkörpers (1) in Form eines Gewebes, Gewirks, Geflechts oder Geleges gebildet ist.

3. Gleitsystem nach Anspruch 1 oder 2, **dadurch gekennzeichnet, dass** die diamantähnliche Beschichtung (3)
- eine Härte von mindestens 4000 HV,
- einen E-Modul von mindestens 400 GPa,
- eine mittlere Rauheit R_{z} kleiner 1 µm
und/oder
- einen Anteil an Wasserstoff kleiner 0,5 At %
aufweist.

4. Gleitsystem nach einem der vorhergehenden Ansprüche, **dadurch gekennzeichnet, dass** der Gegenkörper (2) aus einem Metall oder einer Metalllegierung gebildet ist und bevorzugt zwischen der Oberfläche des Gegenkörpers (2) und der Beschichtung (3) aus diamantähnlichem Kohlenstoff mindestens eine Zwischenschicht ausgebildet ist.

5. Gleitsystem nach einem der Ansprüche 1 bis 3, **dadurch gekennzeichnet, dass** der Gegenkörper (2) ebenfalls aus einer textilverstärkten polymeren Matrixstruktur gebildet ist und die auf Reibung beanspruchte Oberfläche unmittelbar mit einer Beschichtung (3) aus diamantähnlichem Kohlenstoff versehen ist.

6. Gleitsystem nach einem der vorhergehenden Ansprüche, **dadurch gekennzeichnet, dass** die Beschichtung (3) aus diamantähnlichem Kohlenstoff eine Schichtdicke im Bereich 1 µm bis 10 µm hat.

7. Gleitsystem nach einem der vorhergehenden Ansprüche, **dadurch gekennzeichnet, dass** zumindest der Grundkörper (1) mit einem thermoplastischen Polymer oder duromeren Polymer als Matrixsystem gebildet ist.

8. Gleitsystem nach einem der vorhergehenden Ansprüche, **dadurch gekennzeichnet, dass** in der Matrix mindestens ein reibungsmindernder zusätzlicher Schmierstoff, insbesondere PTFE, MoS₂ oder Graphit enthalten ist.

9. Gleitsystem nach einem der vorhergehenden Ansprüche, **dadurch gekennzeichnet, dass** ein Grundkörper (1) und/oder ein Gegenkörper (2) aus miteinander verbundenen Vorprodukten (4, 5 und 6) hergestellt ist.

10. Gleitsystem nach einem der vorhergehenden Ansprüche, **dadurch gekennzeichnet, dass** der Grundkörper (1) und der Gegenkörper (2) an tribologisch beanspruchten Oberflächen mit einer Beschichtung aus diamantähnlichem Kohlenstoff beschichtet sind.

## Claims

1. A system of sliding elements which is formed by a counter-body and a base body as friction partners and in which the base body is formed from a fiber reinforced polymer material and the counter-body is coated with diamond-like carbon at the surface subject to friction, **characterized in that**
at least the base body (1) is formed from a textile reinforced polymer matrix structure and wherein the textile reinforcement is formed from carbon fibers, with the portion of fibers making up at least 50% by volume with respect to the polymer matrix.

2. A system of sliding elements in accordance with claim 1, **characterized in that** the base body (1) is formed by a fabric, a knitted fabric, meshwork or a non-crimp fabric.

3. A system of sliding elements in accordance with claim 1 or claim 2, **characterized in that** the diamond-like coating (3) has
- a hardness of at least 4000 HV:
- an elasticity modulus of at least 400 GPa;
- a mean roughness R_{z} of less than 1 µm;
and/or
- portion of hydrogen less than 0.5 At%.

4. A system of sliding elements in accordance with one of the preceding claims, **characterized in that** the counter-body (2) is formed from a metal or from a metal alloy and at least one intermediate layer is preferably formed between the surface of the counter-body (2) and the coating (3) of diamond-like carbon.

5. A system of sliding elements in accordance with one of the claims 1 to 3, **characterized in that** the counter-body (2) is likewise formed from a textile reinforced polymer matrix structure and the surface subject to friction is directly provided with a coating (3) of diamond-like carbon.

6. A system of sliding elements in accordance with one of the preceding claims, **characterized in that** the coating (3) of diamond-like carbon has a layer thickness in the range of 1 µm to 10 µm.

7. A system of sliding elements in accordance with one of the preceding claims, **characterized in that** at least the base body (1) is formed with a thermoplastic polymer or a duromer polymer as a matrix system.

8. A system of sliding elements in accordance with one of the preceding claims, **characterized in that** at least one friction-reducing additional lubricant, in particular PTFE, MoS₂ or graphite, is contained in the matrix.

9. A system of sliding elements in accordance with one of the preceding claims, **characterized in that** a base body (1) and/or a counter-body (2) is manufactured from mutually connected precursors (4, 5 and 6).

10. A system of sliding elements in accordance with one of the preceding claims, **characterized in that** the base body (1) and the counter-body (2) is coated at tribologically stressed surfaces with a coating of diamond-like carbon.

## Revendications

1. Système de glissement, qui est formé avec un contre-corps et un corps de base en tant que partenaires de frottement, le corps de base étant formé d'un matériau polymère renforcé par des fibres, et le contre-corps étant, sur la surface soumise à frottement, recouvert d'un carbone adamantin,
**caractérisé en ce qu'**au moins le corps de base (1) est formé d'une structure de matrice polymère renforcée par un textile, le renforcement textile étant constitué de fibres de carbone représentant une portion d'au moins 50 % en volume par rapport à la matrice polymère.

2. Système de glissement selon la revendication 1, **caractérisé en ce que** le renforcement du corps de base (1) par un textile est configuré sous forme d'un tissu, d'un article tricoté, d'une tresse ou d'une grille.

3. Système de glissement selon la revendication 1 ou 2, **caractérisé en ce que** le revêtement adamantin (3) présente
- une dureté d'au moins 4000 HV,
- un module d'élasticité d'au moins 400 GPa,
- une rugosité moyenne R_{z} inférieure à 1 µm, et/ou
- une proportion d'hydrogène inférieure à 0,5 % en atomes.

4. Système de glissement selon l'une des revendications précédentes, **caractérisé en ce que** le corps de base (2) est constitué d'un métal ou d'un alliage métallique, et de préférence qu'au moins une couche intermédiaire est formée entre la surface du contre-corps (2) et le revêtement (3) en carbone adamantin.

5. Système de glissement selon l'une des revendications 1 à 3, **caractérisé en ce que** le contre-corps (2) est lui aussi formé d'une structure de matrice polymère renforcée par un textile, et que la surface soumise à frottement est directement pourvue d'un revêtement (3) en carbone adamantin.

6. Système de glissement selon l'une des revendications précédentes, **caractérisé en ce que** le revêtement (3) en carbone adamantin a une épaisseur de couche comprise dans la plage de 1 µm à 10 µm.

7. Système de glissement selon l'une des revendications précédentes, **caractérisé en ce qu'**au moins le corps de base (1) est formé avec un polymère thermoplastique ou un polymère thermodurcissable servant de système de matrice.

8. Système de glissement selon l'une des revendications précédentes, **caractérisé en ce que** la matrice contient au moins un lubrifiant supplémentaire diminuant le frottement, en particulier du PTFE, du MoS₂ ou du graphite.

9. Système de glissement selon l'une des revendications précédentes, **caractérisé en ce qu'**un corps de base (1) et/ou un contre-corps (2) sont fabriqués à partir de demi-produits (4, 5 et 6) assemblés les uns aux autres.

10. Système de glissement selon l'une des revendications précédentes, **caractérisé en ce que** le corps de base (1) et le contre-corps (2) sont, sur les surfaces soumises à sollicitation tribologique, revêtus d'un revêtement en carbone adamantin.
